(19) Europäisches Patentamt
European Patent Office
Office européen des brevets

(11) EP 1 940 939 B1

(12) FASCICULE DE BREVET EUROPEEN

(45) Date de publication et mention de la délivrance du brevet:
**29.08.2012 Bulletin 2012/35**

(21) Numéro de dépôt: **06804566.5**

(22) Date de dépôt: **03.10.2006**

(51) Int Cl.:
***C08K 7/24*** *(2006.01)* ***C08L 83/04*** *(2006.01)*

(86) Numéro de dépôt international:
**PCT/BE2006/000108**

(87) Numéro de publication internationale:
**WO 2007/048208 (03.05.2007 Gazette 2007/18)**

# (54) COMPOSITION RESISTANTE AU FEU

FLAMMFESTE ZUSAMMENSETZUNG

FIREPROOF COMPOSITION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.10.2005 US 731008 P**
**28.10.2005 US 731363 P**
**06.03.2006 US 780022 P**

(43) Date de publication de la demande:
**09.07.2008 Bulletin 2008/28**

(73) Titulaire: **Nanocyl S.A.**
**5060 Sambreville (BE)**

(72) Inventeurs:
- **ALEXANDRE, Michäel**
**B-4102 Ougree (BE)**
- **DUBOIS, Philippe**
**B-4260 Braives (BE)**
- **DEVALCKENAERE, Myriam**
**F-59730 Vertain (FR)**
- **CLAES, Michäel**
**B-4020 Liege (BE)**

(74) Mandataire: **pronovem**
**Office Van Malderen**
**Parc d'affaires Zénobe Gramme- bâtiment K**
**Square des Conduites d'eau 1-2**
**4020 Liège (BE)**

(56) Documents cités:
**EP-A1- 1 471 114 WO-A-03/070821**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 940 939 B1

**Description**

## Objet de l'invention

La présente invention se rapporte à une composition comprenant un polymère réticulé et des nanotubes de carbone, ainsi qu'à un procédé de mise en oeuvre de cette composition. La composition selon l'invention possède des propriétés viscosimétriques et anti-feu surprenantes permettant d'utiliser celle-ci respectivement sous la forme d'un revêtement de protection anti-feu et sous la forme d'un joint ignifuge.

## Etat de la technique

Dans l'aéronautique, les peintures classiques sont généralement appliquées par pulvérisation au moyen d'un pistolet à peinture. Pour les revêtements à base de polymère, cette technique est difficilement transposable car les polymères utilisés présentent une consistance pâteuse. La pose de ce genre de revêtements peut alors poser un certain nombre de problèmes pratiques.

Les joints tout comme les peintures doivent posséder des propriétés de viscosité particulières. Ils doivent d'une part être suffisamment souples pour que la pose soit facile, et d'autre part être suffisamment figés par la suite pour conserver leur forme tout en suivant les déformations éventuelles des matériaux qu'ils lient.

Une autre problématique est celle de la résistance au feu des matériaux dans le temps, et en particulier dans le domaine de l'aéronautique. On essaye généralement d'augmenter la résistance au feu de certaines parties métalliques d'un avion en appliquant un revêtement afin de retarder au maximum l'échauffement de la partie métallique qu'il protège.

Les joints qui lient les matériaux anti-feu entre eux constituent par ailleurs un autre angle d'attaque pour le feu. En effet, ces joints, qui ne sont pas ou peu ignifugés par rapport aux matériaux qu'ils lient, peuvent commencer à fondre bien avant que le seuil de température critique des matériaux soit atteint. Dans ce cas, le bénéfice du matériau ignifuge est moindre.

Les revêtements anti-feu classiques sont généralement des polymères fortement chargés en matière inerte ou en charge susceptible de réagir à la chaleur et de former une couche de passivation protégeant les parties métalliques d'un échauffement trop rapide. L'inconvénient de l'utilisation de ce type,de revêtement est le fait que la quantité de charge nécessaire est généralement supérieure à 10%, ce qui a pour effet d'altérer les propriétés mécaniques des polymères utilisés et de les rendre moins souples. Or, un revêtement anti-feu se doit de suivre les mouvements et la dilatation thermique des éléments sur lesquels il est appliqué. A défaut, des fissures peuvent apparaître et constituer des points d'attaque pour le feu.

Afin de préserver les propriétés physiques et mécaniques d'un polymère anti-feu, tout en conservant ses propriétés de résistance à la flamme, il a été proposé d'incorporer au polymère des nanotubes de carbone.

Le document WO 03/070821 décrit une composition contenant des nanotubes de carbone à hauteur de 10 à 60% en volume.

Il a été également proposé d'incorporer, outre des nanotubes de carbone, différents retardateurs de flamme, comme décrit dans le document EP 1 471 114, ou des phyllosilicates, encore appelées charges argileuses plaquettaires, comme décrit dans le document WO 03/078315.

Toutefois, afin d'obtenir de bonnes propriétés de résistance au feu, le pourcentage des charges additionnelles du polymère reste élevé. De plus, de tels polymères anti-feu n'ont pas la consistance adaptée à leur application sous la forme d'un enduit ou d'un joint.

## Buts de l'invention

La présente invention vise à fournir une composition et un procédé d'obtention d'un enduit ou d'un joint qui ne présentent pas les inconvénients des compositions de l'état de la technique.

En particulier, la présente invention vise à fournir une composition qui comprend une faible quantité de charge additionnelle, qui soit souple et facile à appliquer.

La présente invention vise également à fournir un enduit qui confère aux éléments sur lesquels il est appliqué une excellente résistante à la chaleur et un joint qui résiste également très bien à la chaleur de façon à maintenir fixé l'ensemble des éléments qu'il lie.

La présente invention propose également un procédé d'obtention d'un tel enduit ou joint anti-feu.

## Résumé de l'invention

La présente invention divulgue une composition résistante au feu comportant du polysiloxane réticulé et des nanotubes de carbone bruts ayant une valeur de bound rubber supérieure ou égale à 15 grammes par gramme de

nanotube de carbone, lesdits nanotubes de carbone représentant entre 0.05 et 1% du poids total de ladite composition.

Selon des formes particulières de réalisation, l'invention comporte l'une ou plusieurs des caractéristiques suivantes :

- le pourcentage en poids desdits nanotubes de carbone bruts représente entre 0.25 et 0.5% du poids total de ladite composition ;
- la consistance du polysiloxane est adaptée à une application au pinceau ou au pistolet à extruder ;
- les nanotubes de carbone bruts sont choisis parmi le groupe des nanotubes de carbone à simple paroi (SWNTs), à double paroi (DWNTs) ou à multiple paroi (MWNTs).

L'invention divulgue par ailleurs un procédé d'obtention d'une composition selon la revendication 1 comportant les étapes suivantes :

a) réalisation d'un premier mélange par mise en présence d'un précurseur A comprenant :

- un polysiloxane comportant des groupes vinyles,
- des nanotubes de carbone, dont la proportion en poids est comprise entre 0.05 et 1% du poids du produit final ;

b) addition d'un précurseur B, comprenant un polysiloxane avec des groupes hydrosilanes, au premier mélange obtenu dans l'étape a) ;
c) réalisation de la réticulation du mélange obtenu à l'étape b).

Selon des formes particulières de réalisation, le procédé comporte les caractéristiques suivantes :

- la réticulation du mélange se fait par une action thermique, chimique ou photochimique ;
- la proportion en poids des nanotubes de carbone dans le procédé est comprise entre 0.25 et 0.5% du poids du produit final ;
- le procédé comporte une étape de dégazage du premier mélange avant l'addition de celui-ci dans l'étape b) ;
- ladite étape de dégazage se fait par l'effet du vide.

L'invention divulgue par ailleurs :

- l'utilisation de la composition selon l'invention comme revêtement de protection anti-feu ;
- l'utilisation de la composition selon l'invention comme joint ignifuge ;
- l'utilisation de la composition selon l'invention comme enduit.

## Brève description des figures

La figure 1 représente l'augmentation de la viscosité du précurseur du polymère en fonction de la quantité de charge pour des composites comprenant soit des nanotubes de carbone soit des charges argileuses.

La figure 2 représente la variation de viscosité du précurseur du polymère en fonction de la quantité de charge pour des composites comprenant des nanotubes de carbone de différentes natures.

La figure 3 représente la variation de viscosité du précurseur du polymère en fonction du pourcentage en poids de nanotubes de carbone pour des composites comprenant des nanotubes de carbone de différentes puretés.

La figure 4 représente schématiquement les interactions entre nanotube de carbone et matrice polymérique.

La figure 5 représente les valeurs du test du bound rubber d'une composition à base de polysyloxane composée d'une matrice PDMS comprenant des groupements vinyles, en fonction des nanotubes de carbone provenant de différents producteurs. Les nanotubes de carbone NC 7000, NC 9000, NC 3100 et NC 3101 produits par l'inventeur de la présente invention, sont respectivement des nanotubes de carbone multi-parois bruts (NC 7000), enrobés de polyéthylène (NC 9000), purifiés (NC 3100) et purifiés puis fonctionnalisé avec du COOH (NC 3101).

La figure 6 représente le banc d'essai feu en cours d'utilisation.

La figure 7 est une représentation schématique du banc d'essai de la figure 5.

La figure 8 représente schématiquement un moule utilisé pour la réalisation de plaques d'aluminium recouvertes du revêtement anti-feu selon l'invention.

La figure 9 représente l'augmentation de température d'une plaque d'aluminium sans revêtement et d'une plaque d'aluminium recouverte d'un revêtement selon l'invention (épaisseur entre 2 et 4mm) contenant 1% en poids de nanotubes de type SWNTs ou MONTs.

La figure 10 représente l'augmentation de température d'une plaque d'aluminium sans revêtement et de plaques

d'aluminium recouvertes d'un revêtement (épaisseur entre 2 et 4mm) contenant 0,25% et 0,5% en poids de nanotubes de type MWNTs.

La figure 11 représente l'augmentation de température d'une plaque d'aluminium sans revêtement et de plaques d'aluminium recouvertes d'un revêtement (épaisseur entre 2 et 4mm) contenant 0,5% et 1 % en poids de nanotubes de type MWNTs de différentes puretés.

La figure 12 représente le rapport entre la température mesurée au centre de la plaque d'essai et celle mesurée à une extrémité de cette même plaque pour différentes compositions anti-feu (épaisseur entre 2 et 4mm).

La figure 13 représente l'augmentation de température d'une plaque d'aluminium recouverte d'un revêtement (épaisseur 2,3mm et une température de flamme de 1070°C) contenant 0,05% en poids de nanotubes de carbone bruts de type MWNTs. L'effet d'amélioration de la résistance au feu est bien perceptible même à une concentration de nanotubes de carbone aussi basse. L'échantillon de test maintient sa température en dessous de 250°C jusqu'à 60 minutes.

## Définition

Par nanotubes bruts, nous entendons des nanotubes de carbone qui n'ont subi aucun traitement post-synthèse, comme une purification éventuelle par traitement acide et/ou basique, un recuit à haute température, un découpage, une désagglomération, etc.

## Description détaillée de l'invention

Pour répondre à la double problématique de l'obtention d'un enduit et d'un joint ayant un faible taux de charge, souple, facile à appliquer et qui possède également de bonnes propriétés anti-feu, l'invention propose de façon originale l'emploi de nanotubes de carbone bruts et ayant une valeur supérieure ou égale à 15 grammes par gramme de nanotubes de carbone au test du « bound rubber » dans un polymère réticulé à base de polysiloxane.

Les nanotubes de carbone bruts sont des nanotubes qui n'ont subi aucun traitement post-synthèse.

Selon une forme de réalisation préférée de l'invention, le polymère utilisé est le Slygard 184 de Dow Corning, une résine qui réticule par hydrosilylation à haute température.

On entend par résine qui réticule par hydrosilylation, une résine obtenue à partir de deux précurseurs de type polysiloxane, l'un comportant les groupes vinyles et l'autre des groupes hydrosilanes.

La réticulation, qui s'effectue à 105°C, consiste en une réaction d'addition des groupes hydrosilanes sur les groupes vinyles (schéma 1).

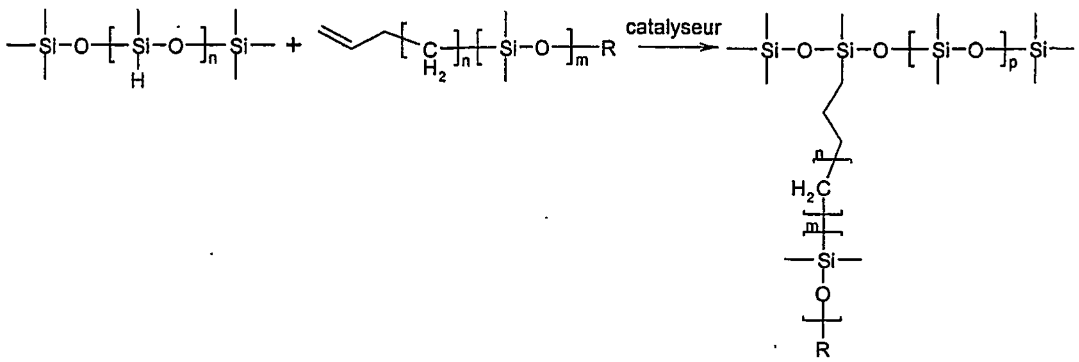


Schéma 1

La composition de la résine Slygard 184 de Dow Corning est donnée dans le tableau 1 et la structure chimique des composants est donnée dans les schémas 2 à 5.

Tableau 1 : composition de la résine

| | Précurseur A | Précurseur B |
|---|---|---|
| Constituant 1 Nature et pourcentage | PDMS terminé vinyle SFD 117 67% | Polymère Si-H (0.76% de H, MDD(H)) 60% |
| Constituant 2 Nature et pourcentage | VQM 1 (2% en vinyle) 31% | SFD 117 39% |

(suite)

| | Précurseur A | Précurseur B |
|---|---|---|
| Constituant 3 Nature et pourcentage | Catalyseur Platine 0.14% | Inhibiteur méthyle cyclotetra siloxane 1% |
| Autres constituants | Composés cycliques et silicone de bas poids moléculaire volatile (1.5%) et xylène (0.7%) | |
| Viscosité dynamique | 4817 cP | 89.1 cP |

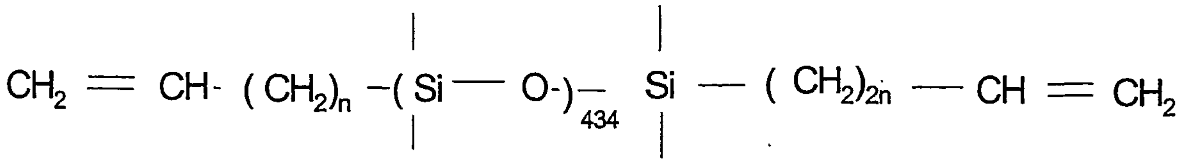

Schéma 2 : SFD 117, polysiloxane porteurs de groupes vinyles

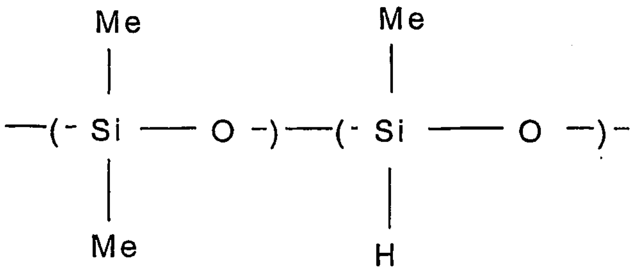

Schéma 3 : polymère de type polysiloxane porteurs de groupes hydrosilanes

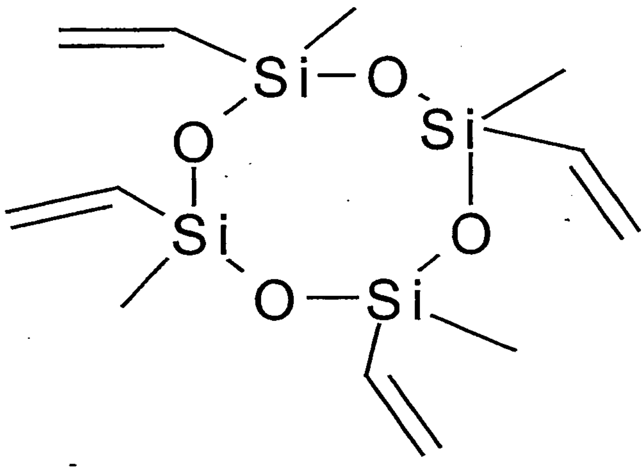

Schéma 4 : Inhibiteur de réticulation

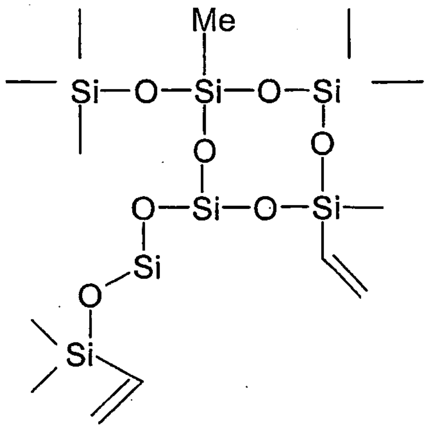

Schéma 5 : matrice VQM comprenant un microréseau polydiméthyle siloxane

L'effet des nanotubes de carbone sur la viscosité des constituants du polymère dans lequel ils sont incorporés, notamment du précurseur A, est illustré à la figure 1. La viscosité du précurseur A contenant des nanotubes de carbone multi-parois est nettement augmentée par rapport à des compositions plus classiques contenant des charges argileuses.

Comme le montrent les figures 2 et 3, la viscosité du précurseur A varie en fonction de différents paramètres tels que la taille, le diamètre et la pureté des nanotubes de carbone.

Il apparaît qu'un taux de charge de moins de 1% en poids de nanotubes de carbone permet une augmentation significative de la viscosité et plus particulièrement avec les nanotubes de carbone bruts. Ces derniers entraînent une augmentation significative de la viscosité du polymère avec de très faibles taux de charge compris entre 0,2 et 0,3% en poids, comme le montre la figure 3. Cette augmentation surprenante de la viscosité s'explique par la très grande affinité des nanotubes de carbone bruts pour le polymère de polysiloxane (Fig. 4), comme le montrent les mesures effectuées grâce à un test dit du "bound rubber" (tableau 2). La procédure expérimentale de ce test consiste à extraire 3,5g du mélange précurseur A / nanotubes de carbone avec 30mL de solvant (heptane) pendant 4h, à 25°C. Après centrifugation et évaporation du solvant, le résidu sec est pesé afin de déterminer la quantité de polymère PDMS lié aux nanotubes de carbone.

Tableau 2 : Affinité des nanotubes de carbone pour la matrice polymérique de la composition

| Composition du système | Contenu de PDMS fixé par gramme de charge (en g) | Conclusions |
|---|---|---|
| 0,5% NC 7000 | 21 ± 3 | Très bonne affinité entre le PDMS et les nanotubes de carbone bruts |
| Montmorillonite | ~ 0,1 | Aucune affinité |
| Sepiolite | 2,5 | Affinité limitée |

Ce tableau montre que les nanotubes bruts ont une affinité largement supérieure avec le précurseur A par rapport à des argiles (sepiolite et montmorillonite). La figure 5 compare les résultats au test bound rubber de nanotubes de carbone provenant de différents producteurs. Il apparaît clairement que le nanotube de carbone brut de Nanocyl obtient une valeur significativement plus élevée par rapport aux autres nanotubes.

Les propriétés viscosimétriques du précurseur A chargé faiblement en nanotubes de carbone permettent l'application au pinceau de ce précurseur en vue d'enduire la surface d'un matériau. De façon surprenante, même à ce faible taux de charge en nanotubes de carbone, la composition obtenue après réticulation présente un effet anti-feu significatif.

La capacité de résistance au feu de la composition selon l'invention a été étudiée grâce à un test s'inspirant du test ISO 2685 utilisé dans l'aéronautique.

Le test est réalisé à l'aide d'un bec bunsen de 5cm de diamètre (Fig. 6). La plaque d'aluminium recouverte ou non de la composition, d'une surface de 145*145mm et d'une épaisseur de 4mm, est placée à 2cm au-dessus du brûleur.

Elle est maintenue par deux barres métalliques horizontales placées à chaque extrémité de la plaque. Un thermocouple mesure de façon continue la température au centre de la plaque, côté aluminium non recouvert.

Le test au feu est chronométré et la température est relevée toutes les deux à trois minutes.

Afin de suivre les conditions et l'évolution du test au feu, la puissance de chauffe du brûleur est déterminée par la méthode suivante : la température de la flamme est tout d'abord mesurée, puis une quantité connue d'eau (par exemple 700cl soit 700g) est chauffée sur la flamme dans un cristallisoir, placé à une hauteur équivalente à celle où la plaque est déposée, et sa température est relevée à intervalles réguliers (par exemple toutes les quinze secondes). Un graphique de la température de l'eau en fonction du temps peut alors être tracé. Selon la relation suivante, la puissance de chauffe (Pchauffe) est exprimée en kW : $P_{chauffe} = m_{eau} * C_{peau} * \frac{dT}{dt}$, , où $\frac{dT}{dt}$ correspond à la pente de la courbe de température en fonction du temps, $C_{Peau} = 4.185^{kJ}/_{kg.K}$ et $m_{eau}$ correspond à la masse d'eau exprimée en kg. En tenant compte de la section du cristallisoir ($S = \pi R^2$, exprimée en $m^2$) , la puissance de chauffe vaut typiquement environ 70 +/- 5 kW/$m^2$, tandis que la température de la flamme est d'environ 1000°C.

Ainsi, lors de chaque série de tests au feu, une mesure de la puissance de chauffe est réalisée et une plaque d'aluminium vierge est testée. Ces deux opérations permettent de connaître la puissance du brûleur et de vérifier que sa puissance ne varie pas d'un essai à l'autre. Avant de brûler la plaque destinée à être testée, une mesure de la température de la flamme est effectuée. Lors de l'essai, la température du thermocouple arc-bouté et en contact au-dessus de la plaque est mesurée toutes les deux à trois minutes. Les observations suivantes sont alors notées : présence ou absence de fumées, détachement d'un morceau ou d'une couche du revêtement, aspect du revêtement, début d'incurvation de la plaque.

Le test prend fin lorsque le thermocouple transperce la plaque ou que la plaque s'incurve jusqu'à toucher le brûleur. Si cela ne s'est pas produit après 90 minutes de test, l'essai est arrêté.

Un graphique de l'évolution de la température de la plaque en fonction du temps est tracé, permettant ainsi de comparer plusieurs formulations entre elles et d'en dégager les plus performantes.

Les éléments, sur lesquels est appliquée la composition anti-feu selon l'invention et qui sont de préférence des plaques d'aluminium, sont de préférence élaborés grâce à un moule (Fig. 8). Le moule est assemblé grâce à 24 vis (toutes n'ont pas été représentées) placées sur le contour et les baguettes de séparation.

Les plaques d'aluminium sont réalisées de préférence dans un local thermostatisé à 20°C et dont le degré d'humidité est compris entre 50 et 65%.

Les différentes étapes pour la réalisation d'une plaque d'aluminium destinée à un test au feu sont les suivantes :

1) élaboration du mélange précurseur A et nanotubes de carbone, pendant 2h à température ambiante, à l'aide d'une tige agitante tournant à 1200tours/minute ;
2) nettoyage des plaques d'aluminium au dichloro-éthane puis au méthyl-éthyl-cétone ou au 2-butanone et, après évaporation du solvant, application d'un primaire (1200 OS de chez Dow Corning) assurant l'adhésion entre le revêtement et l'aluminium ;
3) dégazage du mélange précurseur A et nanotubes de carbone pendant 10min. à 8,9 mbar de pression ;
4) addition du précurseur B au mélange précurseur A / nanotubes de carbone.

__Exemple__

A 10 parts du précurseur A qui comprend :

- 67% en poids d'une matrice PDMS comprenant des terminaisons vinyles,
- 31% en poids d'une matrice VQM comprenant des groupes vinyles,
- 1% en poids de nanotubes à simple paroi et/ou multi-paroi,
- 0,14 % en poids de catalyseur à base de platine,
- des composées cycliques et silicone de bas poids moléculaire volatile et xylène,

est ajouté, après dégazage à 8,9mbar de pression pendant 10 min., 1 part du précurseur B qui comprend :

- 60% en poids d'un polymère Si-H,
- 39% en poids d'une matrice PDMS comprenant des terminaisons vinyles,
- 1% en poids d'un inhibiteur de réticulation de méthyle cyclotetra siloxane.

La réticulation est ensuite effectuée en plaçant l'élément recouvert du mélange précurseur A / précurseur B, de préférence

des plaques d'aluminium, à 105°C pendant au moins six heures.

La pose de la composition sur des plaques d'aluminium, par exemple sous la forme d'un revêtement, peut se faire selon différents modes de réalisation préférés.

Un premier mode de pose du revêtement consiste en une injection de la composition selon l'invention sur les plaques d'aluminium d'une dimension de 145*145mm ; cela représente 120g de composition par plaque.

Un second mode de pose du revêtement consiste en un coulage de la composition selon l'invention au-dessus des plaques d'aluminium enduites de primaire. La surface est ensuite arasée avec une spatule afin d'obtenir la bonne épaisseur de revêtement. Dans ce mode de réalisation, la plaque supérieure du moule (Fig. 8) n'est pas montée.

Un troisième mode de pose du revêtement consiste en une application de la composition selon l'invention grâce à un pinceau.

Les épaisseurs de revêtement ainsi obtenu sont de 3 ou 4mm d'épaisseur pour le premier et le second mode de pose du revêtement et de 2mm pour le troisième mode de réalisation.

Comme le montrent les figures 9 à 11, la résistance au feu d'une plaque d'aluminium recouverte d'une composition contenant des nanotubes de carbone est nettement améliorée par rapport à une plaque d'aluminium nue ou par rapport à une plaque d'aluminium recouverte du polymère seul.

Parmi les compositions contenant 1% en poids de nanotubes de carbone (Fig. 9), une distinction peut être faite entre les différents nanotubes de carbone utilisés. Ceux qui confèrent une meilleure résistance au feu sont, par ordre d'importance, les DWNTs (nanotube double paroi), les MWNTs et enfin les « thin MWNTs ». De plus, il apparaît clairement, au vu des résultats de la figure 9, que ce sont les nanotubes de carbone notés « bruts », qu'ils soient MWNTs ou thin MWNTs, qui confèrent une meilleure résistance au feu au cours du temps. Ces nanotubes de carbone « bruts » sont des nanotubes n'ayant subi aucun traitement post-synthèse et ayant une grande affinité avec la matrice polysiloxane.

Une amélioration significative des propriétés anti-feu est obtenue pour des compostions contenant 0.5% à 0.25%, en poids de nanotubes de carbone. Cette amélioration reste même encore significative à 0.05 % en poids de nanotubes de carbone . Là encore, les meilleurs résultats sont obtenus avec des nanotubes de carbone « bruts », n'ayant subi aucun traitement post-synthèse et ayant une grande affinité avec la matrice polysiloxane.

Des mesures de température sont effectuées au centre de la plaque de test, ainsi qu'à l'une des extrémités de cette même plaque. Une valeur R est déterminée comme suit : $R = \frac{Tc}{Te}$,

avec Tc la température mesurée au centre de la plaque d'essai et Te, la température mesurée à l'extrémité de la plaque d'essai.

Si R=1, cela signifie qu'il y a sur la plaque une rapide et importante dissipation de la chaleur, alors que si R>1, cela signifie que la dissipation de la chaleur est faible.

Comme le montre la figure 1, l'emploi dans un polymère silicone de nanotubes de carbone permet une meilleure dissipation de la chaleur. De plus, il est avantageux d'utiliser 0.25% en poids de nanotube de carbone, voire même 0.1%, une valeur pour laquelle la dissipation de chaleur se rapproche de la valeur optimale (R=1).

Pour déterminer un seuil minimum en nanotubes de carbone pour lequel une amélioration de la résistance au feu du PDMS serait constatée, une concentration de 0.05% en poids des nanotubes de carbone multi paroi a été testée. La figure 13 montre que l'effet de protection de la plaque d'aluminium est toujours bien présente pour une durée de 60 minutes.

Par ailleurs, l'application d'une contrainte, ou pression, sur une composition polymérique en modifie la viscosité. Il est alors possible de choisir le taux de charge en nanotubes de carbone qui correspond à la viscosité voulue pour l'emploi de la composition selon l'invention dans un pistolet à extruder, du type pistolet pour joint ou mastic. Dans un tel dispositif, la pression exercée sur le piston modifie la viscosité de la composition et la rend plus fluide permettant une application facile de la composition. Dès le moment où cesse la pression, la viscosité du produit change à nouveau et la composition se fige et ne coule plus.

## Revendications

1. Composition résistante au feu comportant du polysiloxane réticulé et des nanotubes de carbone bruts ayant une valeur de « bound rubber » supérieure ou égale à 15 grammes par gramme de nanotube de carbone, lesdits nanotubes de carbone représentant entre 0.05 et 1% du poids total de ladite composition..

2. Composition selon la revendication 1 dans lequel le pourcentage en poids desdits nanotubes de carbone bruts représente entre 0.25 et 0.5 % du poids total de ladite composition.

3. Composition selon la revendication 1 ou 2 dans laquelle la consistance du polysiloxane est adaptée à une application

au pinceau ou au pistolet à extruder.

**4.** Composition selon l'une quelconque des revendications précédentes dans lequel les nanotubes de carbone bruts sont choisis parmi le groupe des nanotubes de carbone à simple paroi (SWNTs), à double paroi (DWNTs), ou à multiple paroi (MWNTs).

**5.** Procédé d'obtention d'une composition selon la revendication 1 comportant les étapes suivantes :

a) réalisation d'un premier mélange par mise en présence d'un précurseur A comprenant :

- un polysiloxane comportant des groupes vinyles,
- des nanotubes de carbone, dont la proportion en poids est comprise entre 0.05 et 1% du poids du produit final ;

b) addition d'un précurseur B, comprenant un polysiloxane avec des groupes hydrosilanes, au premier mélange obtenu dans l'étape a) ;
c) réalisation de la réticulation du mélange obtenu à l'étape b).

**6.** Procédé selon la revendication 5 dans lequel la réticulation du mélange se fait par une action thermique, chimique ou photochimique.

**7.** Procédé selon la revendication 5 dans lequel la proportion en poids des nanotubes de carbone est comprise entre 0.25 et 0.5% du poids du produit final.

**8.** Procédé selon la revendication 5 dans lequel ledit procédé comporte une étape de dégazage du premier mélange avant l'addition de celui-ci dans l'étape b).

**9.** Procédé selon la revendication 8 dans lequel ladite étape de dégazage se fait par l'effet du vide.

**10.** Utilisation de la composition selon l'une quelconque des revendications précédentes comme revêtement de protection anti-feu.

**11.** Utilisation de la composition selon l'une quelconque des revendications précédentes comme joint ignifuge.

**12.** Utilisation de la composition selon l'une quelconque des revendications précédentes comme enduit.

## Claims

**1.** Fire-resistant composition containing reticulated polysiloxane and raw carbon nanotubes with a "bound rubber" value greater than or equal to 15 grams per gram of carbon nanotube, said carbon nanotubes representing between 0.05 and 1% of the total weight of said composition.

**2.** Composition as in Claim 1, in which the percentage by weight of said raw carbon nanotubes represents between 0.25 and 0.5% of the total weight of said composition.

**3.** Composition as in Claim 1 or Claim 2 in which the consistency of the polysiloxane is appropriate for an application by brush or by extrusion gun.

**4.** Composition as in any of the above claims in which the raw carbon nanotubes are selected among the group of single-wall (SWNTs), double-wall (DWNTs) or multi-wall (MWNTs) carbon nanotubes.

**5.** Method for obtaining a composition as in Claim 1 containing the following stages:

a) production of a first mixture by bringing together a precursor A containing:

- a polysiloxane containing vinyl groups,
- carbon nanotubes with a proportion by weight of between 0.05 and 1% of the weight of the final product;

b) addition of a precursor B, containing a polysiloxane with hydrosilane groups, to the first mixture obtained in stage a);
c) making of the reticulation of the first mixture obtained in stage b).

6. Method as in Claim 5, in which the reticulation of the mixture is brought about by a thermal, chemical or photochemical action.

7. Method as in Claim 5, in which the proportion by weight of the carbon nanotubes is between 0.25 and 0.5% of the weight of the final product.

8. Method as in Claim 5, in which said method includes a degassing stage of the first mixture before the addition of the same in stage b).

9. Method as in Claim 8, in which said degassing stage is done by the vacuum effect.

10. Use of the composition as in any of the above claims as a fire-resistant protective coating.

11. Use of the composition as in any of the above claims as a fireproof seal.

12. Use of the composition as in any of the above claims as filling paste.

**Patentansprüche**

1. Feuerbeständige Zusammensetzung, die vernetztes Polysiloxan und unbearbeitete Kohlenstoff-Nanoröhrchen mit einem "Bound Rubber"-Wert von über oder gleich 15 Gramm pro Gramm Kohlenstoff-Nanoröhrchen aufweist, wobei die Kohlenstoff-Nanoröhrchen zwischen 0,05 und 1 % des Gesamtgewichts der Zusammensetzung darstellen.

2. Zusammensetzung nach Anspruch 1, wobei der Massenanteil der unbearbeiteten Kohlenstoff-Nanoröhrchen zwischen 0,25 und 0,5 % des Gesamtgewichts der Zusammensetzung darstellt.

3. Zusammensetzung nach Anspruch 1 oder 2, wobei die Konsistenz des Polysiloxans für ein Auftragen mit dem Pinsel oder der Extruderpistole geeignet ist.

4. Zusammensetzung nach einem der vorangehenden Ansprüche, wobei die unbearbeiteten Kohlenstoff-Nanoröhrchen aus der Gruppe der einwandigen (SWNT), der doppelwandigen (DWNT) oder der mehrwandigen (MWNT) Kohlenstoff-Nanoröhrchen ausgewählt sind.

5. Herstellungsverfahren einer Zusammensetzung nach Anspruch 1, das die folgenden Schritte aufweist:

a) Durchführen eines ersten Gemischs durch Zusammenbringen mit einer Vorstufe A, die umfasst:

- ein Polysiloxan, das Vinylgruppen aufweist,
- Kohlenstoff-Nanoröhrchen, deren Gewichtsverhältnis im Bereich zwischen 0,05 und 1 % des Gewichts des Endprodukts liegt,

b) Hinzufügen einer Vorstufe B, die ein Polysiloxan mit Hydrosilangruppen umfasst, zur ersten Mischung, gewonnen in Schritt a),
c) Durchführen der Vernetzung des Gemischs, gewonnen in Schritt b).

6. Verfahren nach Anspruch 5, wobei die Vernetzung des Gemischs durch eine thermische, chemische oder photochemische Aktion erfolgt.

7. Verfahren nach Anspruch 5, wobei das Gewichtsverhältnis der Kohlenstoff-Nanoröhrchen im Bereich zwischen 0,25 und 0,5 % des Gewichts des Endprodukts liegt.

8. Verfahren nach Anspruch 5, wobei das Verfahren einen Entgasungsschritt des ersten Gemischs vor Hinzufügen desselben in Schritt b) aufweist.

**9.** Verfahren nach Anspruch 8, wobei der Entgasungsschritt durch Vakuumeffekt erfolgt.

**10.** Verwendung der Zusammensetzung nach einem der vorangehenden Ansprüche als Brandschutzbeschichtung.

**11.** Verwendung der Zusammensetzung nach einem der vorangehenden Ansprüche als feuerfeste Verbindung.

**12.** Verwendung der Zusammensetzung nach einem der vorangehenden Ansprüche als Beschichtung.

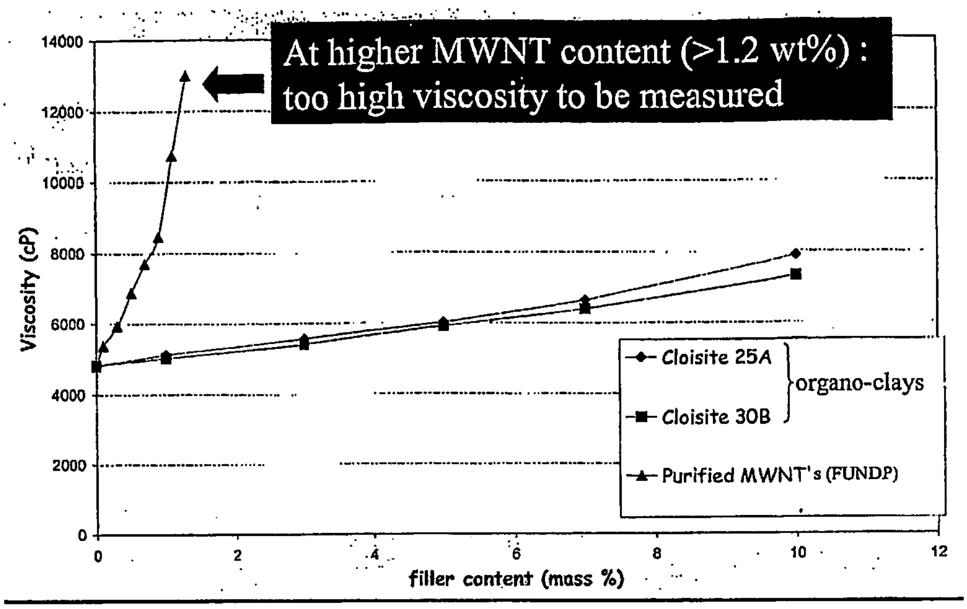
At higher MWNT content (>1.2 wt%) :
too high viscosity to be measured
Viscosity (cP)
14000
12000
10000
8000
6000
4000
2000
0
0
2
4
6
8
10
12
filler content (mass %)
Cloisite 25A
Cloisite 30B
organo-clays
Purified MWNT's (FUNDP)

Fig. 1

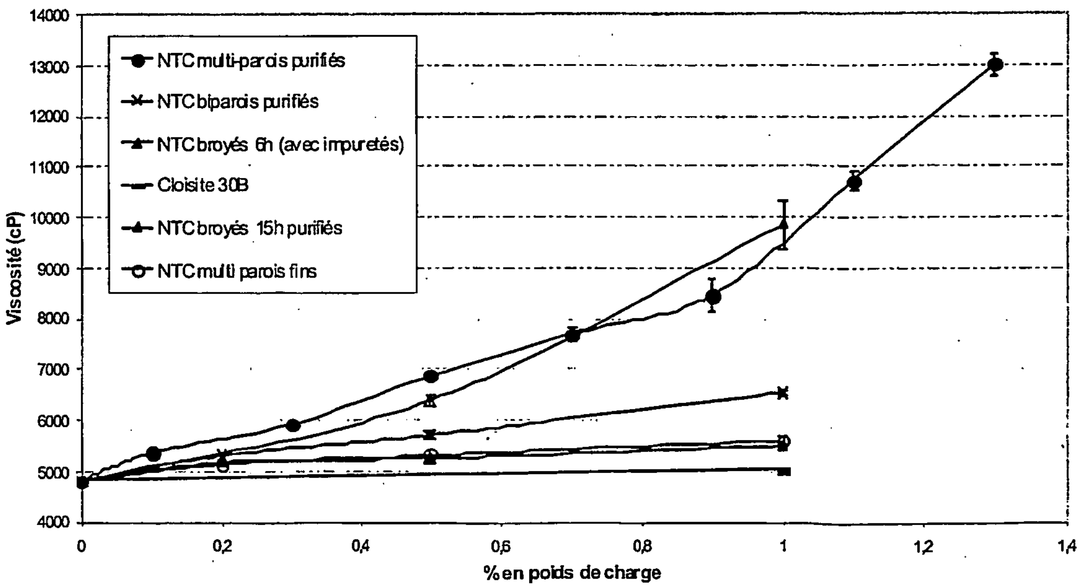
14000
13000
12000
11000
10000
9000
8000
7000
6000
5000
4000
Viscosité (cP)
NTC multi-parois purifiés
NTC biparois purifiés
NTC broyés 6h (avec impuretés)
Cloisite 30B
NTC broyés 15h purifiés
NTC multi parois fins
0
0,2
0,4
0,6
0,8
1
1,2
1,4
% en poids de charge

Fig. 2

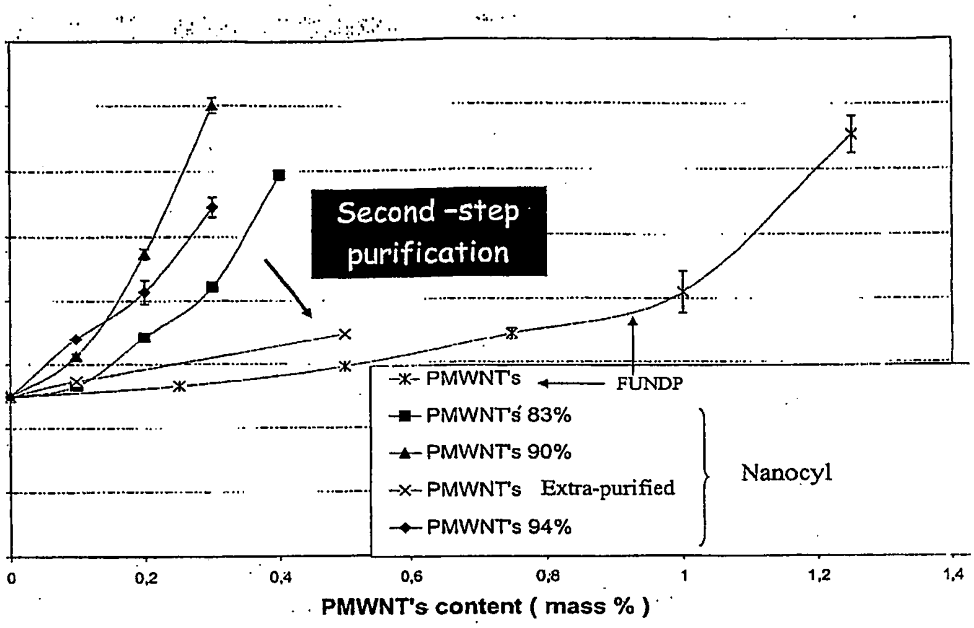
Second -step purification
-✳- PMWNT's
FUNDP
-■- PMWNT's 83%
-▲- PMWNT's 90%
-×- PMWNT's Extra-purified
-◆- PMWNT's 94%
Nanocyl
0
0,2
0,4
0,6
0,8
1
1,2
1,4
PMWNT's content ( mass % )

Fig.3

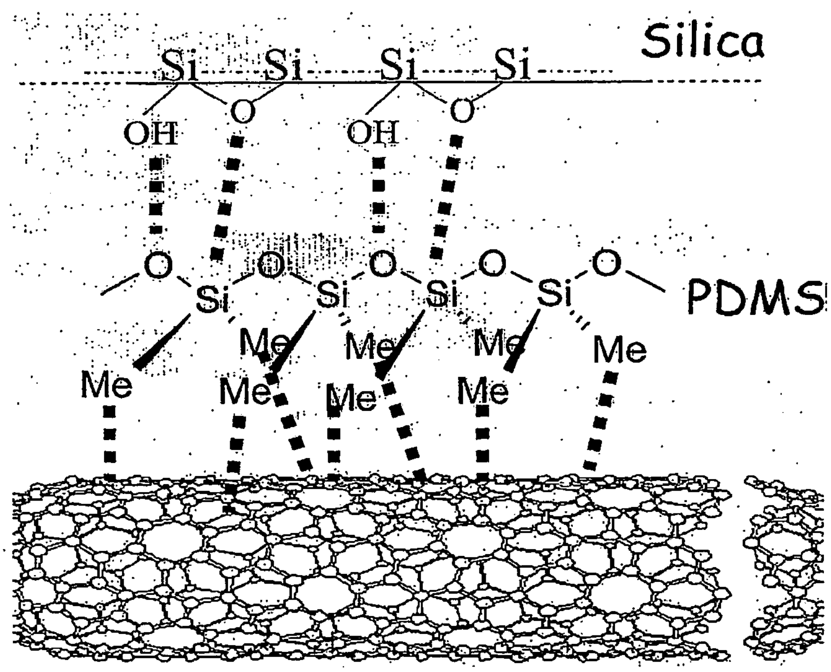
Silica
Si
Si
Si
Si
O
O
OH
OH
O
O
O
O
O
Si
Si
Si
Si
PDMS
Me
Me
Me
Me
Me
Me
Me
Me

Fig.4

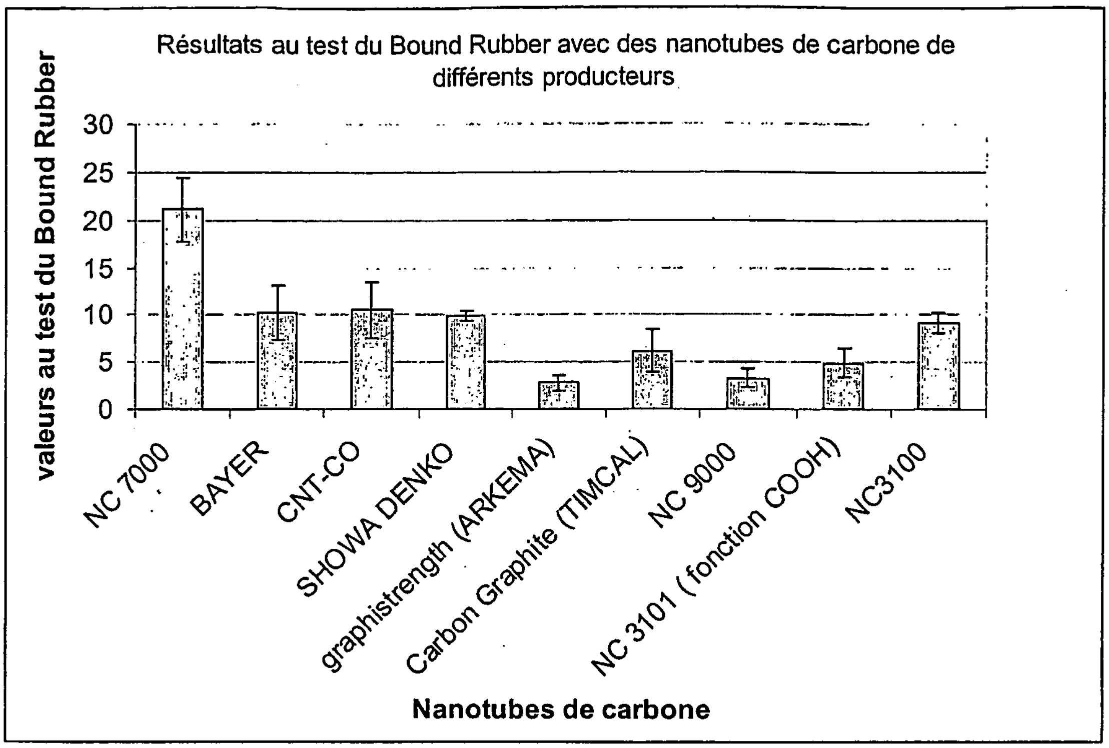
Résultats au test du Bound Rubber avec des nanotubes de carbone de différents producteurs
valeurs au test du Bound Rubber
30
25
20
15
10
5
0
NC 7000
BAYER
CNT-CO
SHOWA DENKO
graphistrength (ARKEMA)
Carbon Graphite (TIMCAL)
NC 9000
NC 3101 (fonction COOH)
NC3100
Nanotubes de carbone

Fig. 5

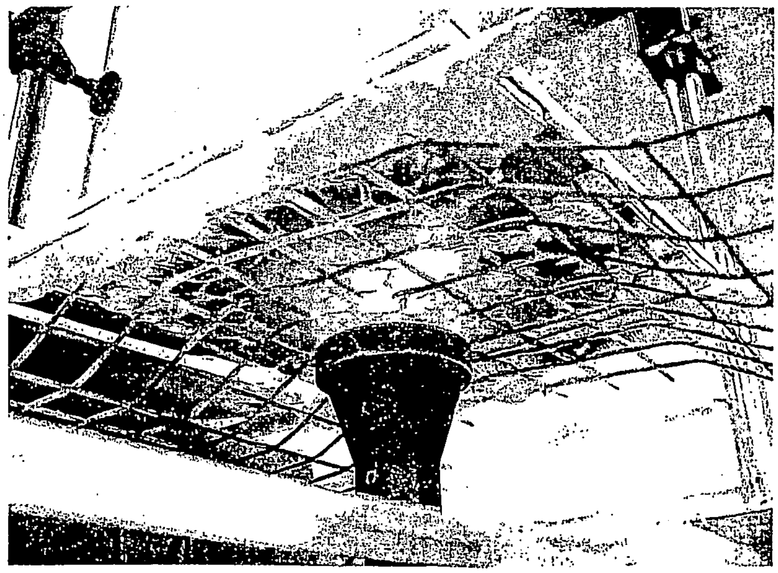

Fig. 6

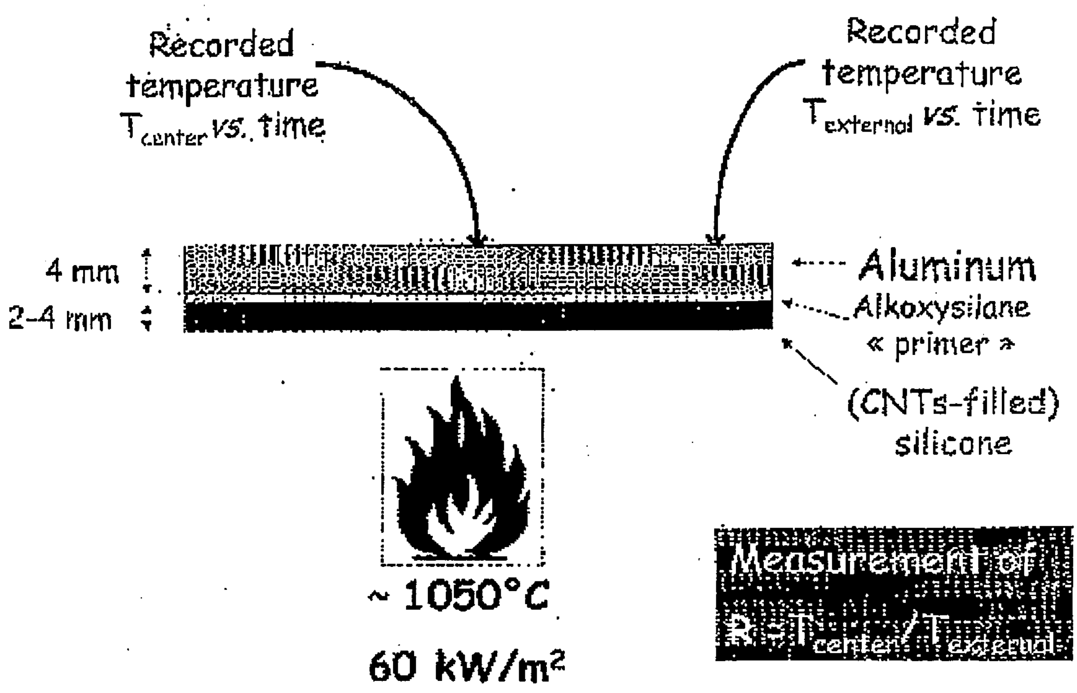
Recorded temperature $T_{center}$ vs. time
Recorded temperature $T_{external}$ vs. time
4 mm
2-4 mm
Aluminum
Alkoxysilane « primer »
(CNTs-filled) silicone
~ 1050°C
60 kW/m²
Measurement of $R = T_{center}/T_{external}$

Fig.7

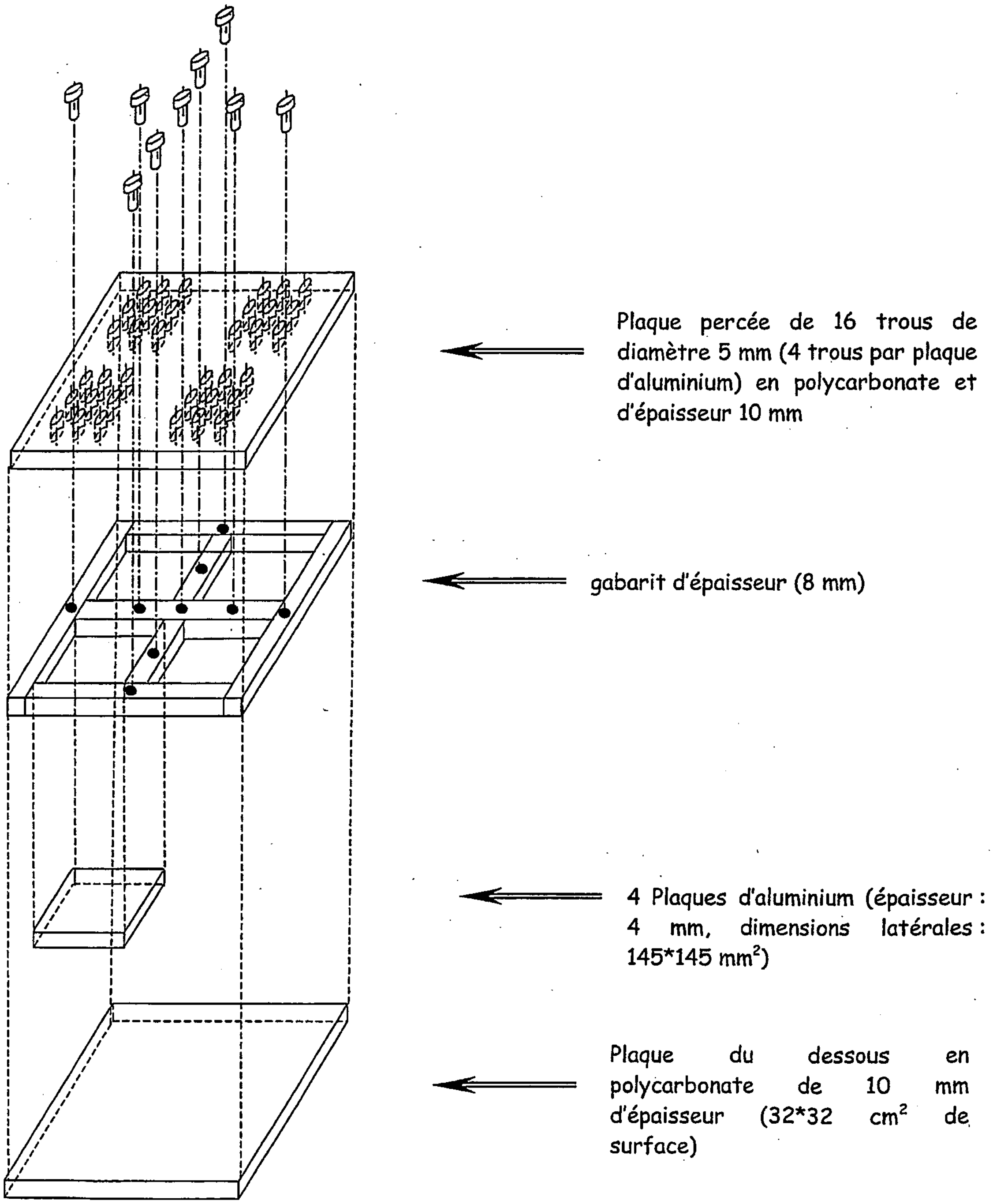
Plaque percée de 16 trous de diamètre 5 mm (4 trous par plaque d'aluminium) en polycarbonate et d'épaisseur 10 mm
gabarit d'épaisseur (8 mm)
4 Plaques d'aluminium (épaisseur : 4 mm, dimensions latérales : 145*145 mm²)
Plaque du dessous en polycarbonate de 10 mm d'épaisseur (32*32 cm² de surface)

Fig.8

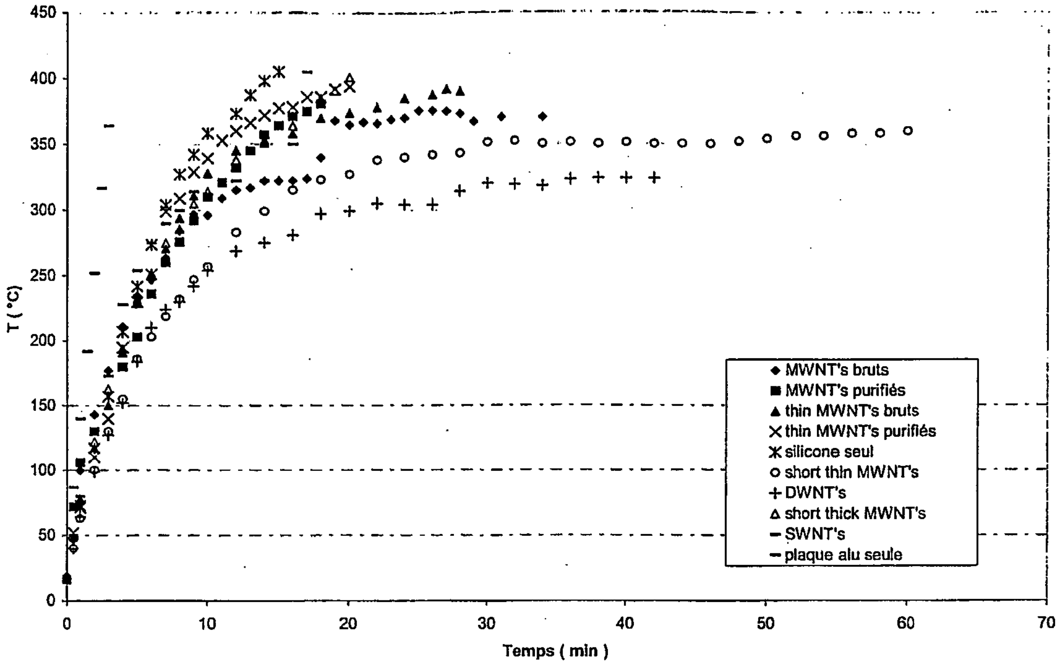


Fig. 9

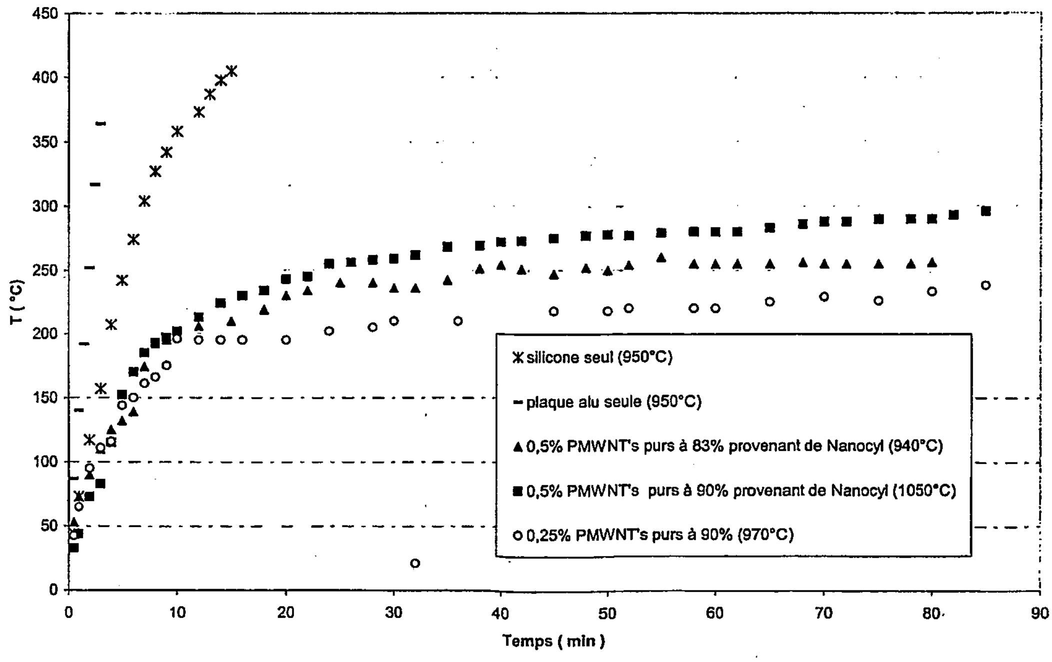


Figure 10

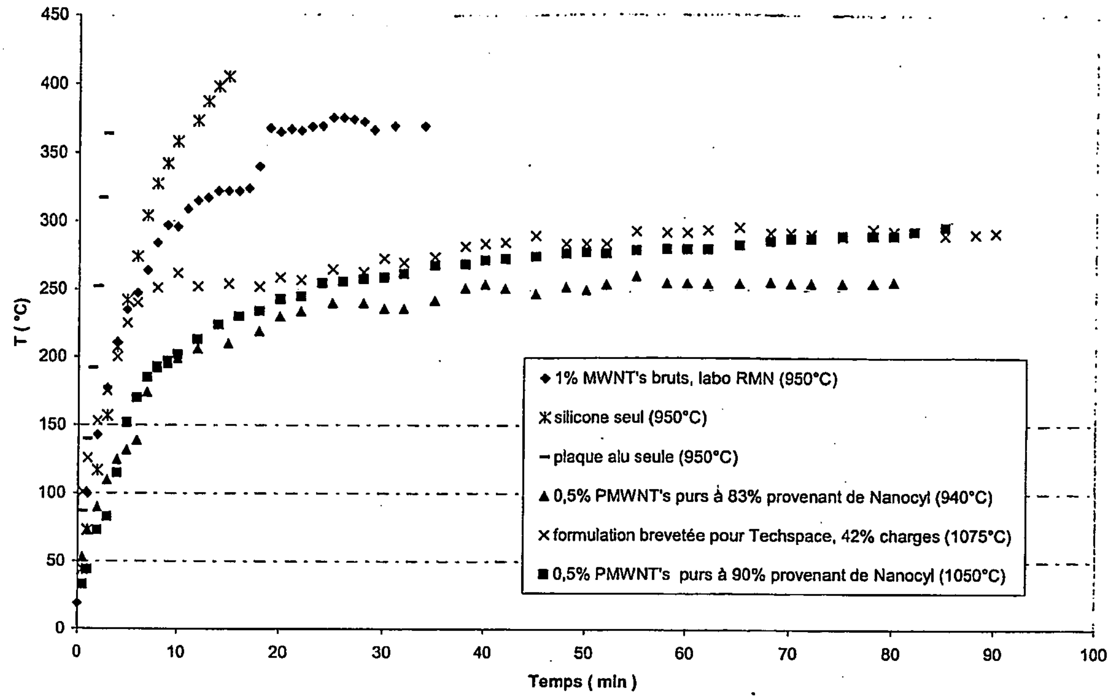
T (°C)
Temps ( min )
◆ 1% MWNT's bruts, labo RMN (950°C)
✳ silicone seul (950°C)
– plaque alu seule (950°C)
▲ 0,5% PMWNT's purs à 83% provenant de Nanocyl (940°C)
× formulation brevetée pour Techspace, 42% charges (1075°C)
■ 0,5% PMWNT's purs à 90% provenant de Nanocyl (1050°C)

Fig. 11

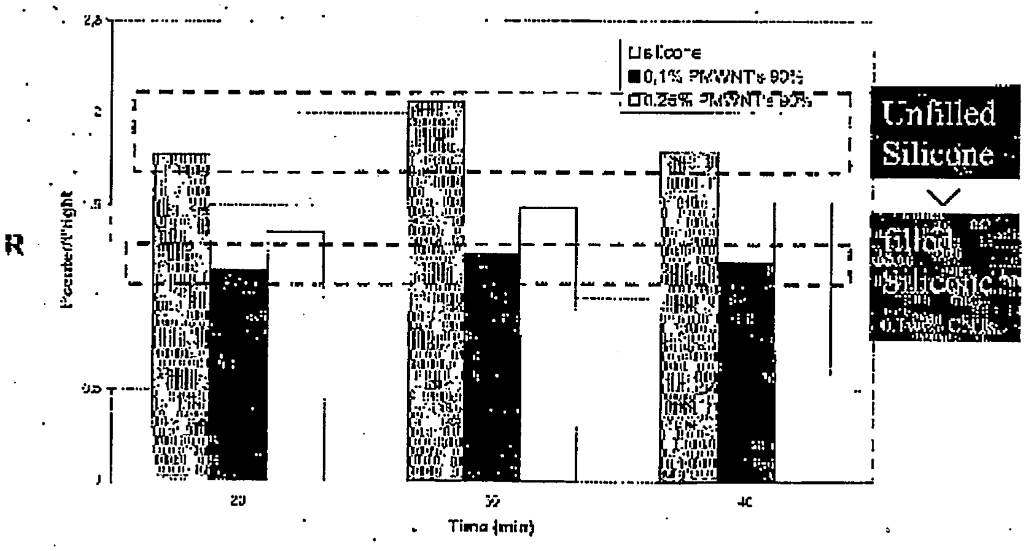
R
Unfilled Silicone
Time (min)

Fig. 12

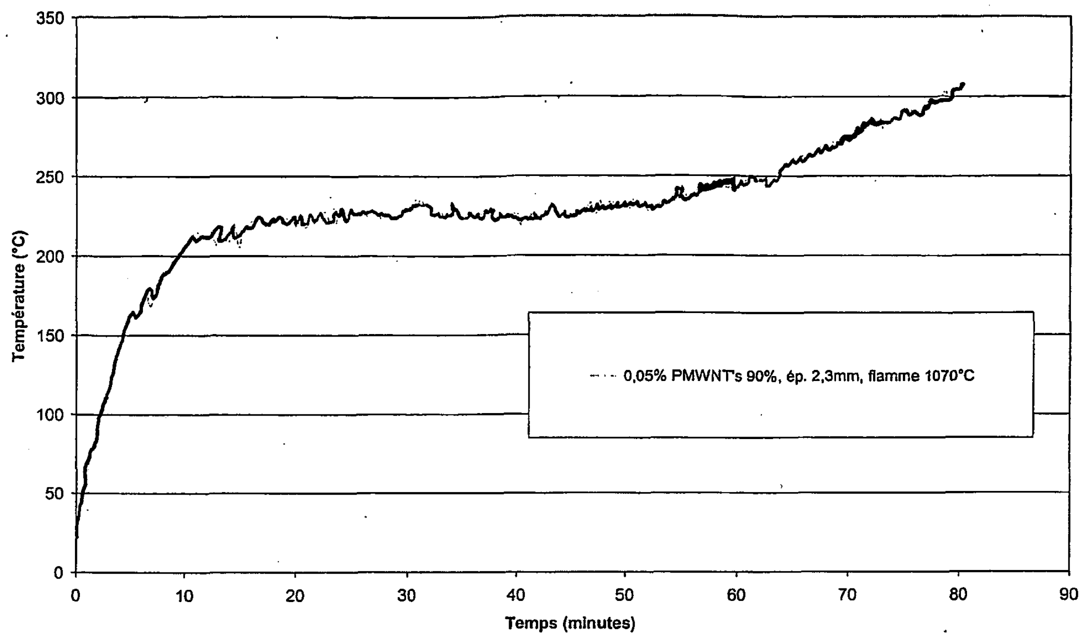

350
300
250
200
150
100
50
0
Température (°C)
0
10
20
30
40
50
60
70
80
90
Temps (minutes)
0,05% PMWNT's 90%, ép. 2,3mm, flamme 1070°C


Fig. 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 03070821 A
- EP 1471114 A
- WO 03078315 A